(19) Europäisches Patentamt
European Patent Office
Office européen des brevets

(11) EP 0 481 277 B1

(12) **EUROPEAN PATENT SPECIFICATION**

(45) Date of publication and mention
of the grant of the patent:
**12.03.1997 Bulletin 1997/11**

(51) Int Cl.[6]: **G05F 1/46**, G05F 1/56,
G05F 1/573

(21) Application number: **91116731.0**

(22) Date of filing: **01.10.1991**

(54) **Current source**

Stromquelle

Source de courant

(84) Designated Contracting States:
**DE FR GB IT**

(30) Priority: **15.10.1990 US 597830**

(43) Date of publication of application:
**22.04.1992 Bulletin 1992/17**

(73) Proprietor: **NATIONAL SEMICONDUCTOR
CORPORATION
Santa Clara California 95051-8090 (US)**

(72) Inventor: **Wright, Michael E.
Berkeley, CA 94709-2024 (US)**

(74) Representative: **Sparing Röhl Henseler
Patentanwälte
Postfach 14 04 43
40074 Düsseldorf (DE)**

(56) References cited:
**US-A- 4 605 891**

## Description

This invention relates to voltage regulator output power transistor safe operating area protection (SOA).

A wide variety of protection techniques are known in the prior art, including techniques which reduce output transistor conduction by reducing base (or gate) drive to synthesize current limits, over-voltage limits, and junction temperature limits. What the continuous safe area limit techniques (as opposed to the more simple digital on/off protection techniques) have in common is a resistor that senses the supply voltage for the current limit circuit. However, when the quiescent current of the circuit must be made very low, the required resistor becomes an inefficient solution. For example, a 3 M$\Omega$ resistor sensing a 30 V supply draws 10 $\mu$A. (A resistor having much higher resistance will consume excessive integrated circuit die area). This amount of current, plus the current consumed by the remainder of the current limiting circuitry, is unacceptably high.

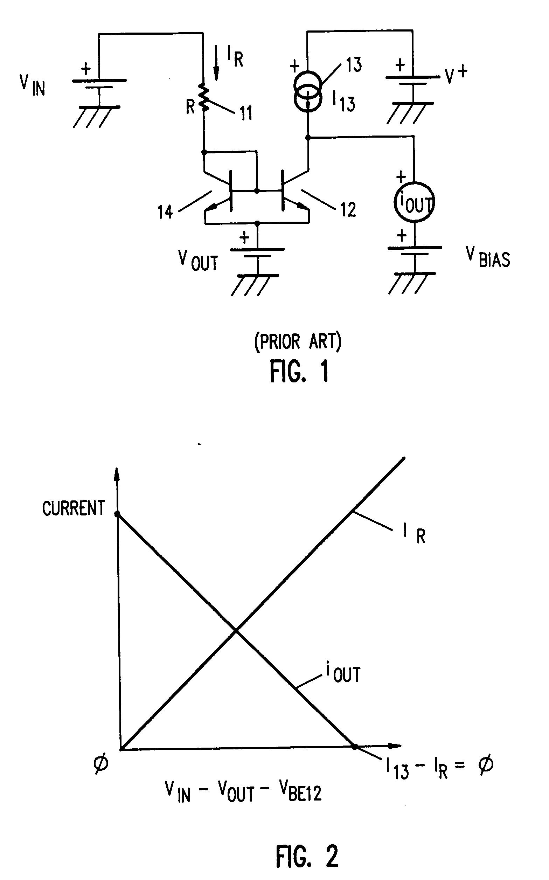

Figure 1 is a schematic diagram of a typical prior art current source, utilizing resistor 11 to sense supply voltage $V_{in}$. The circuit of Figure 1 provides an output current $I_{out}$ in response to input voltage $V_{in}$. As shown in the graph of Figure 2, as input voltage $V_{in}$ increases, current $I_R$ increases, which flows through diode connected transistor 14. Transistor 12 mirrors this current, thereby increasing the amount of current I from current source 13 which is sunk by transistor 12, and thus decreasing the available output current $I_{out}$.

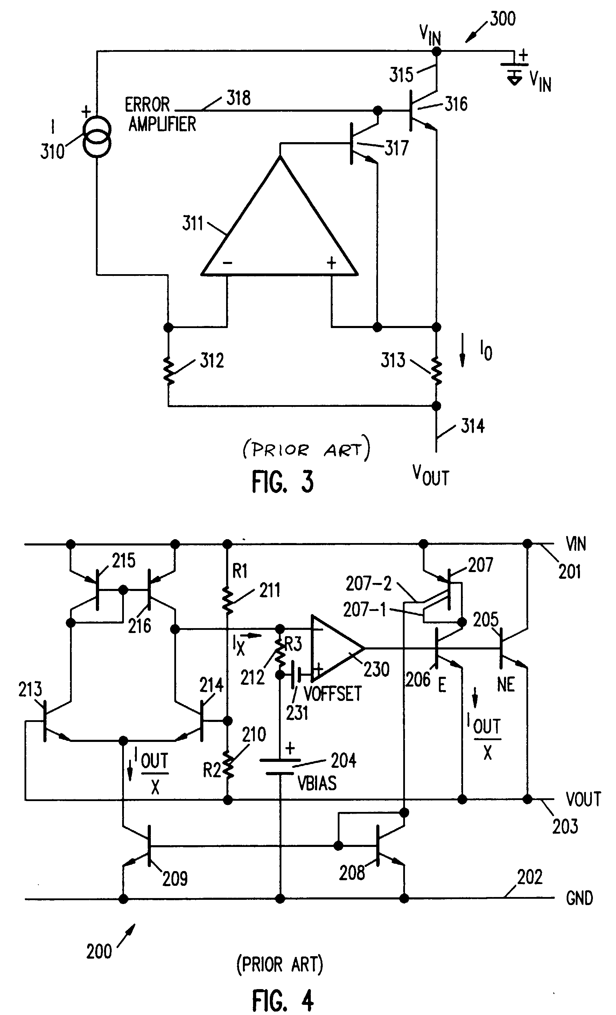

A schematic diagram of a prior art current limit circuit 300 is shown in Figure 3. Differential amplifier 311 turns on transistor 317, in an analog fashion, to reduce base current drive to transistor 316, assuming that the error amplifier signal applied to lead 318 driving the base of transistor 316 has limited drive capability. Current I from current source 310 produces a voltage drop across resistor 312. In current limit, differential amplifier 311 adjusts power transistor 316 conduction until resistor 313's voltage drop equals that of resistor 312, thereby making $I_O$ proportional to I, with $I_O/I$ equal to the ratio of the resistance of 312 to 313. Let the power dissipation of transistor 316 be held approximately constant by making I inversely proportional to $V_{in} - V_{out}$. This is achieved, for example, by using the prior art circuit of Figure 1 as current source 310 of Fig. 3. Current I is produced by generating a current approximately proportional to $V_{in} - V_{out}$ by resistor 11, and by subtracting that current from a constant current $I_{13}$, to produce $I_{out}$ graphed in Figure 2.

Other methods of producing the approximate constant power dissipation of a pass transistor such as transistor 316 of Figure 3 rely on multiplying a sample of load current $I_O$ by a resistor-divided supply voltage. Such methods not only require the large valued resistors of the voltage divider, but a more accurate error amplifier to perform the multiplication.

Figure 4 is a schematic diagram of a typical prior art multiplying power limit circuit 200. Circuit 200 includes differential amplifier 230 which provides a control signal to the base of output transistor 205, which in turn controls output voltage $V_{out}$. The output current available on output lead 203 is controlled by differential amplifier 230, in response to input voltage $V_{in}$ applied to lead 201. Transistor 206 is connected in parallel with output transistor 205 in order to mirror the current flowing through output transistor 205. PNP transistor 207 is connected as a load device having one of its collectors 207-1 connected to its base and in turn connected to the collector of transistor 206. Collector 207-2 of transistor 207 provides a current which mirrors the current flowing through collector 207-1 of transistor 207. This mirrored current is applied to load device 208, which in turn causes current source 209 to mirror the current flowing through transistor 208. Current source 209 feeds differential transistor pair 213 and 214, with transistor 213 receiving its base drive input signal from output lead 203. A resistive voltage divider formed of resistors 210 and 211 (having resistances $R_2$ and $R_1$, respectively) is connected between $V_{in}$ lead 201 and $V_{out}$ lead 203, and provides a voltage to the base of differential transistor 214. Transistor 215 serves as a load device connected between $V_{in}$ lead 201 and the collector of transistor 213. Transistor 216 mirrors the current flowing through transistor load device 215, and has its collector connected to the inverting input lead of differential amplifier 230 and to the collector of differential input transistor 214. The non-inverting input lead of differential amplifier 230 is connected to a bias voltage above ground provided by bias circuitry 204.

A negative feedback loop includes amplifier 230, pass transistor 205, and the transconductance amplifier consisting of transistors 209, 213, 214, 215, and 216. Because of the high loop gain, the voltages on the inverting and non-inverting input leads of amplifier 230 are forced to be equal. The voltage drop across resistor 212 (having resistance $R_3$) is therefore equal to the offset voltage $V_{offset}$ depicted as 231.

If $I_x$ is the output current of the transconductance amplifier then

$$I_x = \frac{V_{offset}}{R_3} \tag{1}$$

Also,

$$I_x = G_M V_{R2}; \tag{2}$$

where

$$V_{R2} = \text{the voltage drop across resistor 210 having resistance } R_2$$

$$= \frac{(V_{in} - V_{out})R_2}{R_1 + R_2}; \tag{3}$$

and

$$G_M = \text{transconductance} = \frac{I_{c209}}{2V_T}; \tag{4}$$

where

$V_T =$ the thermal voltage KT/q; and, due to current mirrors of transistors 205 and 206, 207, and 208 and 209

$$I_{c209} = \frac{I_{out}}{N}; \text{ where}$$

$I_{c209}$ is the collector current of transistor 209;
$I_{out}$ is the emitter current of pass transistor 205; and
N is a proportionality factor.

Eq. (2) thus becomes

$$I_x = \frac{I_{out}}{2NV_T} \times \frac{(V_{in} - V_{out})R_2}{R_1 + R_2} \tag{5}$$

Setting this equal to Eq. (1) we get

$$\frac{I_{out}(V_{in} - V_{out})K}{2NV_T} = \frac{V_{offset}}{R_3}; \tag{6}$$

where

$$K = \frac{R_2}{R_1 + R_2}$$

or

$$I_{out}(V_{in} - V_{out}) = \frac{2NV_T \times V_{offset}}{KR_3} \tag{7}$$

Since $I_{out}(V_{in} - V_{out})$ equals the power dissipation of pass transistor 205, the circuit of Fig. 4 gives a constant power dissipation.

Unfortunately, prior art circuit 200 of Figure 4 is undesirably sensitive to manufacturing tolerances, for example the inherent DC offset voltage $V_{offset}$ of differential amplifier 230. Furthermore, prior art circuit 200 requires large value resistors 210 and 211 connected between $V_{in}$ lead 201 and $V_{out}$ lead 203, which are difficult to fabricate on an integrated circuit to precise tolerances, and require a large amount of integrated circuit area.

It is an object of this invention to provide a current source whose output falls as $V_{in}$ - $V_{out}$ rises.

It is a further object of the invention to permit provision of a current source whose output current may vary as a wide range of functions of $V_{in}$ - $V_{out}$

It is still a further object of the invention to enable production of the output current as a function of $V_{in}$ - $V_{out}$ with any absolute value of current, supply current, and without large valued resistors. The basic concept of the invention is defined in claim 1. A current source having the features set forth in the preamble of patent claim 1 is disclosed by US-A-4,605,891.

In accordance with the teachings of this invention, a circuit is constructed to limit power transistor conduction to within its safe operation area (SOA), the circuit including a synthetic large value resistor that is an active current source whose output current is related to the power supply voltage, and whose absolute value may be made arbitrarily low. To implement a complex SOA protection function, the SOA circuit of this invention synthesizes currents that are nonlinear fractions of voltage and has a topology that allows the current source output current to be a function of many variables such as junction temperature and machine state.

The topology of the invention makes it flexible in terms of the transfer function that may be synthesized, and the invention relates to a current source whose voltage-to-current transfer function may synthesize a wide variety of functions such as a linear resistor, a nonlinear resistor, and a negative resistor. The transfer functions are piece-wise approximations of the desired functions, with as many pieces as desired for a desired accuracy in generating the transfer functions.

The invention generally relates to the generation of a current that is a piece-wise function of a control voltage.

In accordance with the teachings of this invention, a novel piece-wise current source is provided which includes means for generating one or more control voltages in order to control the level of output current in response to the input voltage. In one embodiment of this invention, each of the control signal means includes feedback means and a summing node, so that one or more functions are performed using a control signal as an input, with the result fed back to the summing node. In this manner, a complex function can easily be provided for controlling the magnitude of the output current.

In one embodiment of this invention, the one or more control signals are provided by one or more saturating current mirrors in order to limit the output current made available.

In one embodiment of this invention, the saturating current mirror comprises a bipolar transistor having a plurality of collectors, one of the collectors serving to provide the output current, and one or more other collectors connected to circuit elements which have current characteristics with respect to the input voltage. In one embodiment, these other collectors are connected to one or more zener diodes in order to provide a current path through these collectors when the input voltage increases above the predetermined level, thereby decreasing the output current available. In one embodiment of this invention, the circuit elements connected to the collectors provide equal step sizes of the output current to input voltage transfer function, while in another embodiment these steps are made unequal in any desired configuration. In another embodiment of this invention, the collector areas vary among the various collectors, thereby providing a desired ratio among the steps of the transfer function.

In another embodiment of this invention, the bipolar transistor having a plurality of collectors is replaced by a plurality of MOS transistors, having channel widths of desired ratios in order to provide a desired transfer function.

Another embodiment of the invention is disclosed in the appended claims 13 to 18. This embodiment is not illustrated by the drawings.

Figure 1 is a schematic diagram of a typical prior art current source;

Figure 2 is a graph depicting the operation of the circuit of Figure 1;

Figure 3 is a schematic diagram depicting a prior art current limit circuit which, when used with the current source of Figure 1, limits the power dissipation of a pass device;

Figure 4 is a schematic diagram depicting a prior art multiplying power limit circuit;

Figure 5a is a schematic diagram of one embodiment of a current source constructed in accordance with the teachings of this invention utilizing a bipolar transistor having a plurality of collectors;

Figure 5b is a graph depicting the transfer function of the circuit of Figure 5a;

Figure 6 is a schematic diagram of one embodiment of a current source constructed in accordance with the teachings of this invention utilizing a saturated current mirror;

Figure 7a is a schematic diagram of another current source constructed in accordance with the teachings of this invention utilizing a bipolar transistor having a plurality of collectors;

Figure 7b is a graph depicting the transfer function of the circuit of Figure 7a; and

Figure 8 is a schematic diagram of one embodiment of a current source constructed in accordance with the teachings of this invention which utilizes a plurality of MOS transistors.

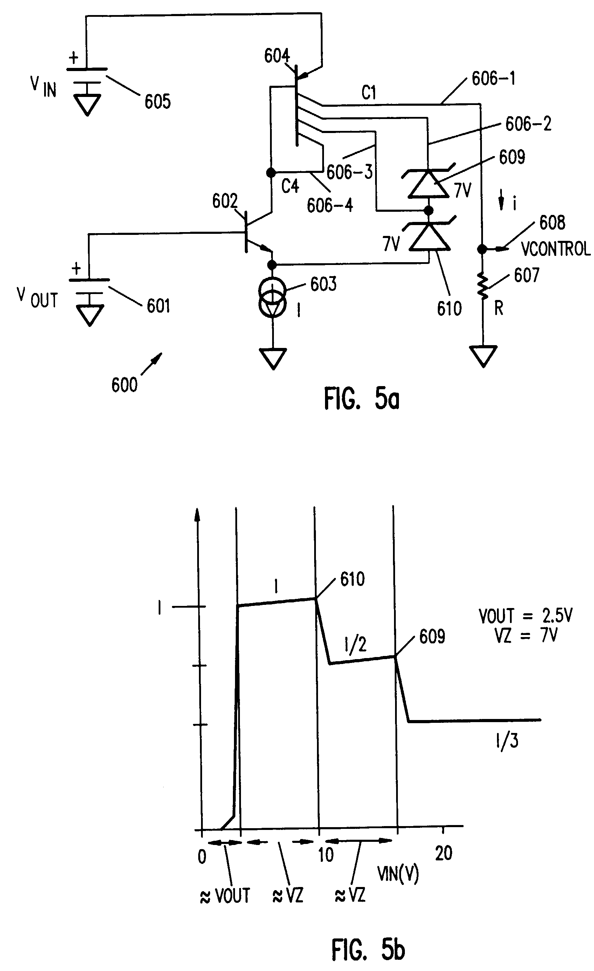

The object of this invention is obtained in the embodiment of this invention depicted as circuit 600 of Figure 5a, which operates as follows with reference to the graph of Fig. 5b. When $V_{in}$ is a high voltage (above $V_{out}$ - $V_{be}$ + 7v + 7v $\geq \simeq$ 20 volts) all collectors 606-1 through 606-4 of multiple collector lateral PNP transistor 604 are active and conducting (equally, if collectors 606-1 through 606-4 are matched). Since collectors 606-1 through 606-4 are matched, of the current I provided by current source 603, I/3 passes through transistor 602 via collector 606-4, and I/3 passes through collector 606-3, I/3 passes through collector 606-2. Therefore, I/3 flows from collector 606-1 through resistor 607, shown here being grounded, for simplicity. As $V_{in}$ falls, collector 606-2 is the first to saturate, with the current conducted by collector 606-2 falling to zero. Neglecting the controllable effects of collector 606-2 emitting minority carriers to its neighboring collectors, I/2 now flows through transistor 602 from collector 606-4, I/2 flows through collector 606-3, and I/2 flows through collector 606-1 as output current. The resulting output voltage increases, as shown as point 609 in the graph of Figure 5b. As $V_{in}$ falls further, collector 606-3 saturates and its current falls to zero. There is now no feedback current, the circuit is operating open-loop, transistor 602 conducts current I from collector 606-4, and collector 606-1 is conducting I as output current. The output voltage rises further, as shown at point 610 of the graph of Figure 5b.

In one embodiment, $V_{in}$ is 5 volts and $V_{out}$ applied to the base of transistor 602 is a constant 2.5 volts, for convenience and in order to allow circuit 600 to be operational with $V_{in}$ of as low approximately 2.5 volts. The relative widths of each collector of transistor 604 are selected to provide the desired transfer function. For example, the transfer function of circuit 600 for matched collectors, as shown in Figure 5b, allows greater power dissipation at low $V_{in}$ where the power transistor (not shown, but typically formed as a portion of a voltage regulator integrated circuit which is controlled by control voltage $V_{control}$) can dissipate more power.

In one embodiment, transistor 604 is formed as four separate transistors having their emitters connected in common and their bases connected in common. The base width associated with collector 606-1 is wider than the base widths associated with collectors 606-2 through 606-4 in order to reduce the effect of size of collector 606-1 relative to the sizes of collectors 606-2 through 606-4, and to increase the output resistance. In one embodiment, transistor 604 is formed including P type guard rings to minimize the collection by the usually active collectors 606-1 and 606-4 of minority carriers emitted by the saturated collectors.

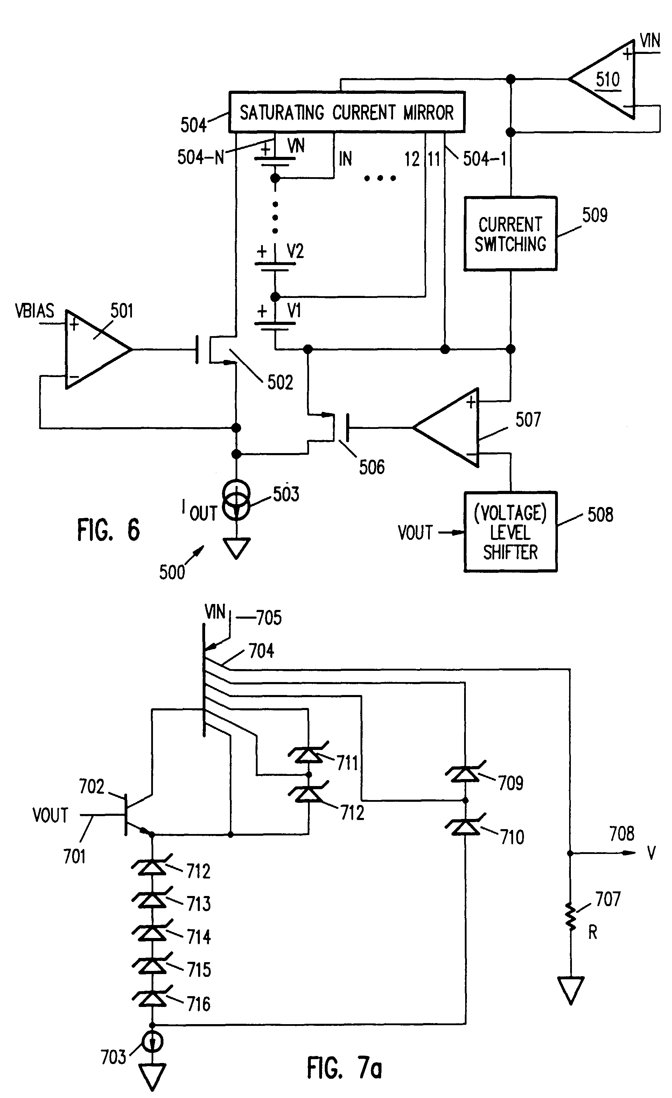

Figure 6 is a schematic diagram of another embodiment of this invention. Circuit 500 includes differential amplifier 510 which receives input voltage $V_{in}$ on its noninverting input lead. Its inverting input lead is connected to its output lead which in turn is connected to saturating current mirror 504. Saturating current mirror 504 includes a number of output leads 504-1 through 504-N which are connected to a variety of voltage sources $V_1$ through $V_n$, respectively. These voltage sources serve to provide a current path for currents $I_l$ through $I_n$, respectively, as input voltage $V_{in}$ increases above voltage levels $V_l$ through $V_n$, respectively, thereby causing the output current $I_{out}$ to decrease with increasing input voltage $V_{in}$. By utilizing a desired set of voltages $V_l$ through $V_n$ of desired magnitudes, the output current function is tailored to any desired accuracy as a function of $V_{in}$. For example, for very small step sizes between voltages $V_1$ through $V_n$, the step sizes of output current $I_{out}$ in response to input voltage $V_{in}$ will be small. If desired, the step sizes between voltages $V_1$ through $V_n$ are equal, although they need not be.

Circuit 500 also includes differential amplifier 501 which receives a bias voltage $V_{bias}$ on its noninverting input lead, and whose output lead drives transistor 502 in order to provide output current $I_{out}$. Of course, the voltage applied to transistor 502 by saturating current mirror 504 is established by the amount of current $I_l$ through $I_n$, as established by voltages $V_l$ through $V_n$, respectively.

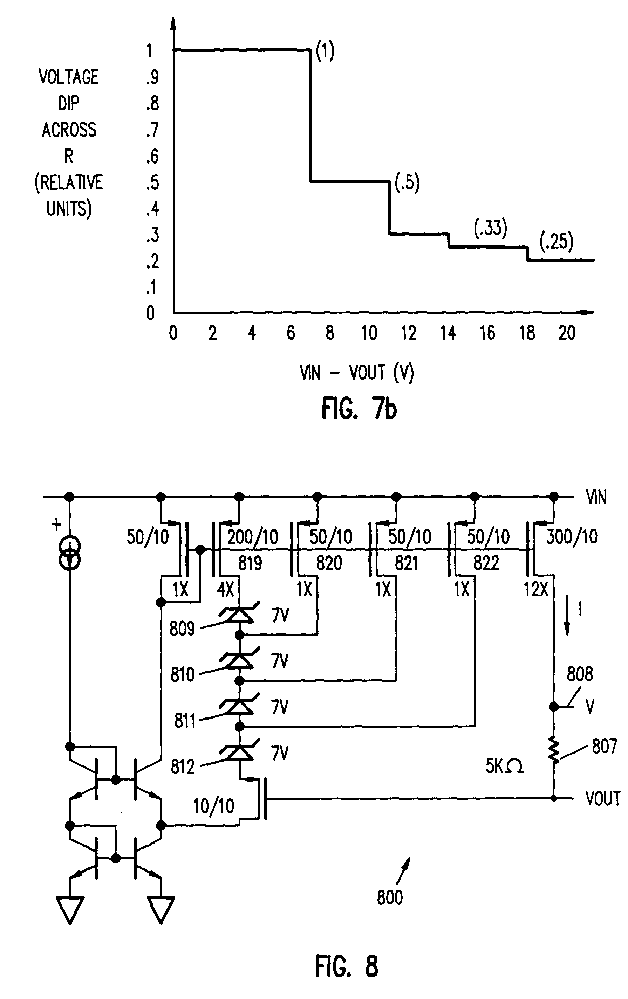

Figure 7a is a schematic diagram of another circuit constructed in accordance with the teachings of this invention. The operation of the circuit of Figure 7a is easily understood with reference to the graph of output current versus input voltage shown in Figure 7b. Assume 0.1 volt saturation for PNP transistor 704, 0.7 forward biased volt base-emitter voltage drop, and 7 volt Zener voltage drop. Then Zener diodes 709 through 712 conduct for the following situations:

(a) all Zener diodes 709 through 712 conduct:

$$V_{in} \geq V_{out} + 0.1v + (2 \times 7v) + (5 \times 0.7v) = V_{out} + 17.6v$$

This yields

$$V_{in} - V_{out} \geq 17.6v$$

(b) for 17.6v > $V_{in}$ - $V_{out} \geq$ 14.1v, Zener diode 710 is off.

(c) for 14.1v > $V_{in}$ - $V_{out} \geq$ 10.6v, Zener diodes 710 and 712 are off.

(d) for 10.6v > $V_{in}$ - $V_{out}$ ≥ 7.1, Zener diodes 709, 710, and 712 are off.

(e) for 7.1v > $V_{in}$ - $V_{out}$, all Zener diodes 709 through 712 are off.

Condition

(a) I = 5$I_x$
$I_x$ = I/5
(b) $I_e$ = 4$I_x$
$I_x$ = I/4
(c) $I_x$ = I/3
(d) $I_x$ = I/2
(e) $I_x$ = I; where

$I_x$ =    the current per collector in PNP transistor 704.

As shown in Figure 7b, the output current available on lead 708 has a step function corresponding to the number of Zener diodes 709 through 712 which are turned on. With a low $V_{in}$-$V_{out}$, all Zener diodes 709 through 712 are non-conducting, and maximum voltage drop across resistor 707 (and thus maximum output current) is obtained. At approximately $V_{in}$ - $V_{out}$ = 7.1 volts, Zener diode 711 begins to conduct, thereby reducing the voltage drop across resistor 707. A second stepwise decrease in the voltage drop across resistor 704 occurs when $V_{in}$ -$V_{out}$ increases to approximately 10.6 volts, when Zener diode 709 begins to conduct. Additional stepwise decreases occur when $V_{in}$ - $V_{out}$ increases to approximately 14.6 volts and 16.6 volts when Zener diodes 712 and 710 begin to conduct, respectively.

Figure 8 is a schematic diagram of another embodiment of this invention which utilizes MOS transistors rather than bipolar transistors in order to cause Zener diodes 809 through 812 to conduct current through associated transistors 819 through 822, respectively, in order to cause a stepwise decrease in output current $I_{out}$ made available on lead 808 as input voltage $V_{in}$ increases.

For the embodiment depicted in the schematic diagram of Figure 8, let $I_x$ = the current flowing through a suitably sized P channel MOS transistor.

(a) For $V_{in}$ - $V_{out}$ < 7v + $V_{gs}$, all Zener diodes 809 through 812 are off and $I_x$ = $I_{in}$
(b) For 7v ≤ $V_{in}$ - $V_{out}$ - $V_{gs}$ < 14v, only Zener diode 812 is on

$$I_{in} = 2I_x$$

so

$$I_x = I_{in}/2$$

(c) For 14v ≤ $V_{in}$ - $V_{out}$ - $V_{gs}$ < 21v, Zener diodes 812 and 811 are on, and thus

$$I_x = I_{in}/3$$

(d) For 21v ≤ $V_{in}$ - $V_{out}$ - $V_{gs}$ < 28v, Zener diodes 810, 811, and 812 are on, and thus

$$I_x = I_{in}/4$$

(e) For 28v + $V_{GS}$ < $V_{in}$ - $V_{out}$, all Zener diodes 809 through 812 are on

$$I_{in} = 3I_x + 4I_x$$

$$I_x = I_{in}/7$$

In all conditions, $I = 12I_x$.

In one embodiment of this invention, for example the embodiment of Figure 7a, the area sizes of collectors 706-1 through 706-6 are scaled by the desired size relationships in order that the step sizes and output current are not equal. For example, for a collector having twice as much area as another, its effect on the decrease in the available output current will be twice as much. In another embodiment of this invention, for example, that of Figure 8, the channel widths of transistors 819 through 822 are scaled in order to have a similar effect.

## Claims

1. A current source (600) comprising:

   an input lead for receiving an input voltage ($V_{IN}$);
   an output lead for providing an output current;
   a current mirror (604) having an input lead coupled to receive an input signal in response to said input voltage, a control lead, and an output lead coupled to said output lead of said current source; and a plurality of output current control means (609, 610), characterized in that said plurality of output current control means are connected to a respective one of a plurality of control leads (606-2, 606-3) of said current mirror (604), each one of said output current control means conducting current from said current mirror (604) when said input voltage ($V_{IN}$) reaches a predetermined level associated with said output current control means, thereby affecting the current available on said output lead of said current mirror.

2. A current source as in claim 1 which further comprises a buffer (510) comprising an input lead for receiving said input voltage ($V_{IN}$) and output lead connected to said input lead of said current mirror (604).

3. A current source as in claim 1 wherein said plurality of output current control means (609, 610) provide a plurality of steps in said output current with respect to said input voltage, said plurality of steps being of equal values as a function of the difference between the input voltage ($Y_{IN}$) and the output voltage ($V_{OUT}$).

4. A current source as in claim 3 wherein said plurality (709-710; 711-712) of output current control means are connected in series, and wherein said plurality of control leads of said current mirror are connected to associated ones of the interconnections between said plurality of output current control means.

5. A current source as in claim 1, wherein said current source comprises a current mirror transistor (604) comprising:

   a base;
   an emitter serving as said input lead of said current source;
   a first collector coupled to said base and coupled to a second current source (603);
   a second collector serving as said output lead of said current mirror; and
   a plurality of additional collectors serving as said plurality of control leads (602, 603) of said current mirror.

6. A current source as in claim 5 which further comprises a coupling transistor (602) having a base for receiving an output voltage ($V_{OUT}$), a collector coupled to said base of said current mirror transistor, and an emitter coupled to said second current source (603).

7. A current source as in claim 5 wherein said output current control means (609, 610) are coupled between an associated one of said plurality of additional collectors and said second current source (603).

8. A current source as in claim 7 wherein said output current control means comprise zener diodes (609, 610).

9. A current source as in claim 8 wherein said output current control means comprise a plurality of zener diodes (609, 610) connected in series, one end of said series coupled to said second current source (603), and the other end of said series and the intermediate nodes of said series connected to respective ones of said plurality of additional collectors.

10. A current source as in claim 9 wherein said zener diodes (609, 610) have approximately equal zener breakdown voltages.

**11.** A current source as in claim 5 wherein said plurality of additional collectors have approximately equal current carrying ability.

**12.** A current source as in claim 5 wherein said plurality of additional collectors have unequal current carrying ability.

**13.** A current source as in claim 6 which further comprises one or more additional current sources coupled to said base of said current mirror transistor, wherein selected ones of said output current control means are coupled to selected ones of said current sources.

**14.** A current source as in claim 13 which further comprises voltage shift means associated with at least some of said current sources, such that said output current control means are coupled to associated ones of said current sources with a predetermined voltage translation.

**15.** A current source as in claim 14 wherein said voltage shift means comprise diodes.

**16.** A current source as in claim 15 which further comprises one or more additional transistors, each having a collector coupled to said collector of said coupling transistor, a base coupled to said base of said coupling transistor, and an emitter coupled to an associate one of said additional current sources.

**17.** A current source as in claim 16 wherein at least some of said additional transistors have their emitters connected to said associated current sources through voltage shift means.

**18.** A current source as in claim 17 wherein said voltage shift means comprise one or more diodes.

**19.** A current source as in claim 1 wherein said current mirror comprises:

a first transistor having a control element, a first current handling lead serving as said input lead of said current mirror and a second current handling lead coupled to said control element and coupled to a current source;
a plurality of additional transistors, each having a control element coupled to said control element of said first transistor, a first current handling lead coupled to said first current handling lead of said first transistor, and a second current handling lead serving as one of said plurality of control leads of said current mirror.

**Patentansprüche**

**1.** Eine Stromquelle (600), umfassend:

einen Eingangsleiter für den Empfang einer Eingangsspannung ($V_{IN}$);
einen Ausgangsleiter für das Bereitstellen eines Ausgangsstromes;
einen Stromspiegel (604), der mit einem Eingangsleiter für den Empfang eines Eingangssignals in Reaktion auf die Eingangsspannung angekoppelt ist, einem Steuerleiter und einem Ausgangsleiter, der an den genannten Ausgangsleiter der Stromquelle angekoppelt ist, und eine Mehrzahl von Ausgangsstromsteuermitteln (609, 610), **dadurch gekennzeichnet**, daß die Mehrzahl von Ausgangsstromsteuermitteln an einen zugeordneten einer Mehrzahl von Steuerleitern (606-2, 606-3) des Stromspiegels (604) angeschlossen ist, wobei jedes der Ausgangsstromsteuermittel Strom von dem Stromspiegel (604) führt, wenn die Eingangsspannung ($V_{IN}$) einen vorbestimmten Pegel erreicht, zugeordnet dem Ausgangsstromsteuermittel, wodurch der Strom beeinflußt wird, der an dem Ausgangsleiter des Stromspiegels verfügbar ist.

**2.** Eine Stromquelle nach Anspruch 1, welche ferner einen Puffer (510) mit einem Eingangsleiter für den Empfang der Eingangsspannung ($V_{IN}$) und einem Ausgangsleiter umfaßt, der mit dem Eingangsleiter des Stromspiegels (604) verbunden ist.

**3.** Eine Stromquelle nach Anspruch 1, bei der die Mehrzahl von Ausgangsstromsteuermitteln (609, 610) eine Mehrzahl von Stufen in dem Ausgangsstrom relativ zu der Eingangsspannung bereitstellt, welche Mehrzahl von Stufen von gleichen Werten als eine Funktion der Differenz zwischen der Eingangsspannung ($V_{IN}$) und der Ausgangsspannung ($Y_{OUT}$) ist.

**4.** Eine Stromquelle nach Anspruch 3, bei der die Mehrzahl (709-710; 711-712) von Ausgangsstromsteuermitteln in Serie geschaltet ist, und bei der die Mehrzahl von Steuerleitern des Stromspiegels angeschlossen an zugeordnete Verbindungsleitungen zwischen der Mehrzahl von Ausgangsstromsteuermitteln sind.

5. Eine Stromquelle nach Anspruch 1, bei der die Stromquelle einen Stromspiegeltransistor (604) umfaßt, mit

einer Basis,
einem Emitter, der als der Eingangsleiter der Stromquelle dient,
einem ersten Kollektor, angekoppelt an die Basis und angekoppelt an eine zweite Stromquelle (603),
einem zweiten Kollektor, der als Ausgangsleiter des Stromspiegels dient, und
einer Mehrzahl von zusätzlichen Kollektoren, die als die Mehrzahl von Steuerleitern (602, 603) des Stromspiegels dient.

6. Eine Stromquelle nach Anspruch 5, die ferner einen Kopplungstransistor (602) mit einer Basis für den Empfang einer Ausgangsspannung ($V_{OUT}$), mit einem Kollektor, der an die Basis des Stromspiegeltransistors angekoppelt ist, und mit einem Emitter umfaßt, der an die zweite Stromquelle (603) angekoppelt ist.

7. Eine Stromquelle nach Anspruch 5, bei der die Ausgangsstromsteuermittel (609, 610) zwischen einem zugeordneten der Mehrzahl zusätzlicher Kollektoren und die zweite Stromquelle (603) gekoppelt sind.

8. Eine Stromquelle nach Anspruch 7, bei der die Ausgangsstromsteuermittel Zener-Dioden (609, 610) umfassen.

9. Eine Stromquelle nach Anspruch 8, bei der die Ausgangsstromsteuermittel eine Mehrzahl von Zener-Dioden (609, 610) umfassen, die in Serie geschaltet sind, wobei ein Ende der Serie mit der zweiten Stromquelle (603) gekoppelt ist, und das andere Ende der Serie und die zwischenliegenden Knoten der Serie an entsprechende der Mehrzahl von zusätzlichen Kollektoren angeschlossen sind.

10. Eine Stromquelle nach Anspruch 9, bei der die Zener-Dioden (609, 610) etwa gleiche Zener-Durchbruchsspannungen haben.

11. Eine Stromquelle nach Anspruch 5, bei der die Mehrzahl von zusätzlichen Kollektoren etwa gleiche Stromführungsfähigkeit aufweisen.

12. Eine Stromquelle nach Anspruch 5, bei der die Mehrzahl von zusätzlichen Kollektoren ungleiche Stromführungsfähigkeit aufweisen.

13. Eine Stromquelle nach Anspruch 6, die ferner eine oder mehrere zusätzliche Stromquellen umfaßt, angekoppelt an die Basis des Stromspiegeltransistors, wobei ausgewählte der Ausgangsstromsteuermittel an ausgewählte der Stromquellen angekoppelt sind.

14. Eine Stromquelle nach Anspruch 13, die ferner Spannungsverschiebemittel umfaßt, zugeordnet zu zumindest einigen der Stromquellen derart, daß die Ausgangsstromsteuermittel an zugeordnete der Stromquellen mit einer vorbestimmten Spannungsübersetzung angekoppelt sind.

15. Eine Stromquelle nach Anspruch 14, bei der die Spannungsverschiebemittel Dioden umfassen.

16. Eine Stromquelle nach Anspruch 15, die weiterhin einen oder mehrere zusätzliche Transistoren umfaßt, von denen jeder mit einem Kollektor an den Kollektor des Kopplungstransistors angekoppelt ist, mit einer Basis an die Basis des Kopplungstransistors angekoppelt ist, und mit einem Emitter an eine zugeordnete der zusätzlichen Stromquellen angekoppelt ist.

17. Eine Stromquelle nach Anspruch 16, bei der zumindest einige der zusätzlichen Transistoren mit ihren Emittern an die zugeordneten Stromquellen über Spannungsverschiebemittel angeschlossen sind.

18. Eine Stromquelle nach Anspruch 17, bei der die Spannungsverschiebemittel eine oder mehrere Dioden umfassen.

19. Eine Stromquelle nach Anspruch 1, bei der der Stromspiegel umfaßt:

einen ersten Transistor mit einem Steuerelement, einer ersten, stromführenden Leitung, die als die Eingangsleitung des Stromspiegels dient, und einer zweiten stromführenden Leitung, angekoppelt an das Steuerelement und angekoppelt an eine Stromquelle;

eine Mehrzahl zusätzlicher Transistoren, von denen jeder ein Steuerelement aufweist, angekoppelt an das Steuerelement des ersten Transistors, eine erste stromführende Leitung, angekoppelt an die erste stromführende Leitung des ersten Transistors und eine zweite stromführende Leitung, die als eine der Mehrzahl von Steuerleitungen des Stromspiegels dient.

**Revendications**

1. Source de courant (600) comprenant :

    un conducteur d'entrée pour recevoir une tension d'entrée ($V_{IN}$);
    un conducteur de sortie pour fournir un courant de sortie;
    un miroir de courant (604) ayant un conducteur d'entrée couplé pour recevoir un signal d'entrée en réponse à ladite tension d'entrée, un conducteur de commande, et un conducteur de sortie couplé audit conducteur de sortie de ladite source de courant; et une pluralité de moyens de commande de courant de sortie (609, 610), caractérisé en ce que ladite pluralité de moyens de contrôle de courant de sortie sont connectés à l'un d'une pluralité de conducteurs de commande (606-2, 606-3) dudit miroir de courant (604), chacun desdits moyens de commande de sortie conduisant du courant provenant dudit miroir de courant (604) quand ladite tension d'entrée (VIN) atteint un niveau prédéterminé associé auxdits moyens de commande de courant de sortie, affectant ainsi le courant disponible sur ledit conducteur de sortie dudit miroir de courant.

2. Source de courant selon la revendication 1 comprenant en outre un tampon (510) comprenant un conducteur d'entrée pour recevoir ladite tension d'entrée ($V_{IN}$) et un conducteur de sortie connecté audit conducteur d'entrée dudit miroir de courant (604).

3. Source de courant selon la revendication 1 dans laquelle ladite pluralité de moyens de commande de courant de sortie (609, 610) fournit une pluralité paliers dans ledit courant de sortie en fonction de ladite tension d'entrée, ladite pluralité paliers étant de valeur égales en fonction de la différence entre la tension d'entrée ($V_{IN}$) et la tension de sortie ($V_{OUT}$).

4. Source de courant selon la revendication 3 dans laquelle ladite pluralité de moyens de commande de courant de sortie (709-710; 711-712) sont connectés en série, et dans laquelle ladite pluralité de conducteurs de commande dudit miroir de courant sont connectés à des conducteurs de commande associées des interconnections entre ladite pluralité de moyens de commande de courant de sortie.

5. Source de courant selon la revendication 1 dans laquelle ladite source de courant comprend un transistor de miroir de courant (604) comprenant :

    une base;
    un émetteur servant comme ledit conducteur d'entrée de ladite source de courant;
    un premier collecteur couplé à ladite base et couplé à une deuxième source de courant (603);
    un deuxième collecteur servant comme ledit conducteur de sortie dudit miroir de courant; et
    une pluralité de collecteurs supplémentaires servant comme ladite pluralité de conducteurs de commande (602, 603) dudit miroir de courant.

6. Source de courant selon la revendication 5 comprenant en outre un transistor de couplage (602) ayant une base pour recevoir une tension de sortie ($V_{OUT}$), un collecteur couplé à ladite base dudit transistor de miroir de courant, et un émetteur couplé à ladite deuxième source de courant (603).

7. Source de courant selon la revendication 5 dans laquelle lesdits moyens de commande de courant de sortie (609, 610) sont couplés entre un collecteur supplémentaire associé de ladite pluralité de collecteurs supplémentaires et ladite deuxième source de courant (603).

8. Source de courant selon la revendication 7 dans laquelle lesdits moyens de commande de courant de sortie comprennent des diodes zener (609, 610).

**9.** Source de courant selon la revendication 8 dans laquelle lesdits moyens de commande de courant de sortie comprennent une pluralité de diodes zener (609, 610) connectés en série, une extrémité de ladite série étant couplée à ladite deuxième source de courant (603) et l'autre extrémité de ladite série et des noeuds intermédiaires de ladite série étant connectés aux collecteurs supplémentaires respectifs de ladite pluralité de collecteurs supplémentaires.

**10.** Source de courant selon la revendication 9 dans laquelle lesdites diodes zener (609, 610) ont une tension de claquage zener approximativement égale.

**11.** Source de courant selon la revendication 5 dans laquelle ladite pluralité de collecteurs supplémentaires ont approximativement une intensité de courant admissible égale.

**12.** Source de courant selon la revendication 5 dans laquelle ladite pluralité de collecteur supplémentaire ont une intensité de courant admissible inégale.

**13.** Source de courant selon la revendication 6 comprenant en outre une ou plusieurs sources de courant supplémentaires couplées à ladite base dudit transistor de miroir de courant, dans laquelle des moyens de commande de courant de sortie sélectionnés parmi lesdits moyens de commande de courant de sortie, sont couplés à des sources de courant sélectionnées parmi lesdites sources de courant.

**14.** Source de courant selon la revendication 13 comprenant en outre des moyens de déphasage de tension associés à au moins certaines desdites sources de courant de sorte que lesdits moyens de commande de courant de sortie sont couplés à des sources de courant associées parmi lesdites sources de courant avec une translation de tension prédéterminée.

**15.** Source de courant selon la revendication 14 dans laquelle lesdits moyens de déphasage de tension comprennent des diodes.

**16.** Source de courant selon la revendication 15 comprenant en outre un ou plusieurs transistors supplémentaires, chacun ayant un collecteur couplé audit collecteur dudit transistor de couplage, une base couplée à ladite base dudit transistor de couplage et un émetteur couplé à une source de courant supplémentaire associée parmi lesdites sources de courant supplémentaires.

**17.** Source de courant selon la revendication 16 dans laquelle au moins certains desdits transistors supplémentaires ont leurs émetteurs connectés auxdites sources de courant associées via des moyens de déphasage de tension.

**18.** Source de courant selon la revendication 17 dans laquelle lesdits moyens de déphasage de tension comprennent une ou plusieurs diodes.

**19.** Source de courant selon la revendication 1 dans laquelle ledit miroir de courant comprend :

un premier transistor ayant un élément de commande, un premier conducteur de traitement de courant servant comme ledit conducteur d'entrée dudit miroir de courant et un deuxième conducteur de traitement du courant couplé audit élément de commande et couplé à une source de courant;
une pluralité de transistors supplémentaires, chacun ayant un élément de commande couplé audit élément de commande dudit premier transistor, un premier conducteur de traitement de courant couplé audit premier conducteur de traitement de courant dudit premier transistor et un deuxième conducteur de traitement de courant servant comme un conducteur de commande parmi ladite pluralité de conducteurs de commande dudit miroir de courant.

(PRIOR ART)

FIG. 1

FIG. 2

ERROR AMPLIFIER — 318

I
310

311

312

313    I₀

314

(PRIOR ART)

## FIG. 3

V_IN — 300

315

316

317

V_IN

V_OUT

VIN
201

215

216

213    214

R1
211

I_X

R3
212

231

VOFFSET

210

R2

I_OUT/X

204

VBIAS

207-2
207-1

207

205

230    206 E    NE

I_OUT/X

VOUT
203

209    208    202

GND

200

(PRIOR ART)

## FIG. 4

FIG. 5a

VOUT = 2.5V
VZ = 7V

FIG. 5b

FIG. 6

FIG. 7a

FIG. 7b

FIG. 8